(19) Europäisches Patentamt

European Patent Office

Office européen des brevets

(11) **EP 4 542 494 A1**

(12) **EUROPEAN PATENT APPLICATION**

(43) Date of publication:
**23.04.2025 Bulletin 2025/17**

(21) Application number: **23204306.7**

(22) Date of filing: **18.10.2023**

(51) International Patent Classification (IPC):
***G06T 11/00*** *(2006.01)*

(52) Cooperative Patent Classification (CPC):
**G06T 11/006;** G06T 2211/408; G06T 2211/424;
G06T 2211/448; G06T 2211/452

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Friedrich-Alexander-Universität
Erlangen-Nürnberg
91054 Erlangen (DE)**

(72) Inventors:
• **RÜCKERT, Darius**
  **91058 Erlangen (DE)**
• **KURTH, Philipp**
  **91058 Erlangen (DE)**

(74) Representative: **Herrmann, Uwe
Lorenz Seidler Gossel
Rechtsanwälte Patentanwälte
Partnerschaft mbB
Widenmayerstraße 23
80538 München (DE)**

(54) **METHOD AND SYSTEM FOR IMAGE RECONSTRUCTION FOR COMPUTER TOMOGRAPHY**

(57) The present invention pertains to a method and system for image reconstruction for computer tomography, in particular for reducing beam hardening effects, wherein image reconstruction is performed based on the generalized Lambert-Beer law for polychromatic sources.

Fig. 3

**EP 4 542 494 A1**

**Description**

The present invention is directed to a method and system for image reconstruction for computer tomography, in particular for reducing artefacts due to the beam hardening effect.

In recent decades, computed tomography (CT) has emerged as an indispensable imaging tool, finding applications in both industry and medicine. By providing detailed cross-sectional images of objects and organisms, CT has revolutionized industrial quality control and medical diagnostics.

However, despite its widespread adoption, CT imaging is not without limitations. One significant obstacle is the beam hardening problem, which arises due to the polychromatic nature of X-ray beams.

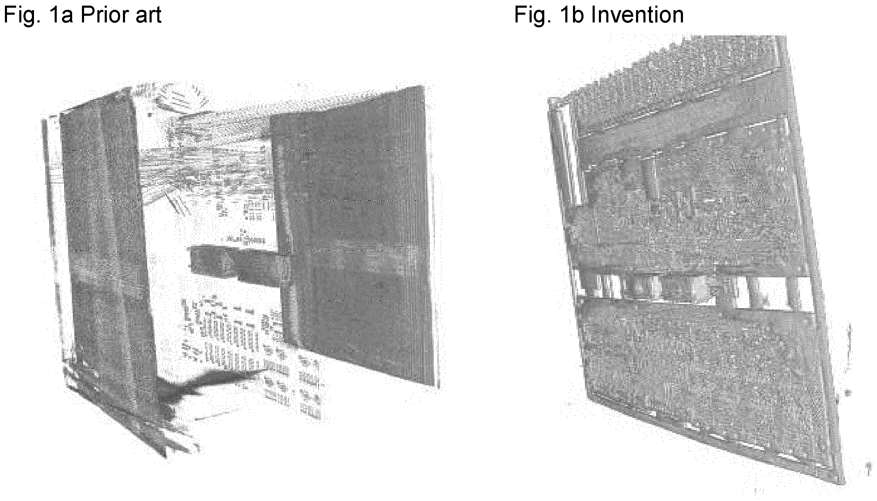

As the X-ray beam passes through an object, higher-energy photons are attenuated less than lower-energy photons. This energy-dependent attenuation leads to a distortion known as beam hardening, causing objects to appear denser and resulting in the appearance of streaking and shading artefacts in the reconstructed images (as can be observed in the reconstruction result of prior art image reconstruction shown in Fig. 1a) and 2a).

These artefacts can compromise the accuracy of measurements and hinder the ability to make precise diagnoses, imposing a critical challenge in both industrial and medical contexts.

It is an object of the present invention to alleviate or completely abolish the shortcomings of the prior art. In particular, it is a technical object of the present invention to provide a possibility of reducing or completely abolishing beam hardening artefacts in image reconstruction for computer tomography.

In this disclosure, a system and method is disclosed, which addresses the beam hardening problem in computed tomography, preferably by employing inverse photon simulation.

By use of the present invention, multi-material objects can be precisely reconstructed with a much reduced amount of beam hardening artefacts or without any such artefacts at all, which enables accurate quality assessment, measurements, and diagnoses.

An aspect of the present invention is directed to a method for image reconstruction for computer tomography, in particular for reducing beam hardening effects, wherein image reconstruction is performed based on the generalized Lambert-Beer law for polychromatic sources

$$I(p) = \int_{e=0}^{\infty} \left( I_0(e) \exp \left( -\int_0^x -\log(\mu(r_p(t), e))dt \right) \right) de$$

[Equation 1]

where $I(p)$ is the intensity at pixel $p$, $I_0(e)$ is the energy distribution of the source, $r_p$ the ray associated with pixel $p$, and $\mu(x,e)$ the energy-dependent absorption coefficient of the volume at position $x$.

Current CT reconstruction algorithms known from the prior art follow the Lambert-beer law of photon attenuation:

$$I(x) = I_0 \exp \left( -\int_0^x -\log(\mu(r_p(t)))dt \right)$$

[Equation 2]

This model, however, is insufficient due to the polychromatic properties of x-ray sources, often employed for CT imaging, as has been recognized by the inventors of the present invention.

In addition, a method according to the present invention can encompass a step of using inverse photon simulation.

According to an embodiment of the invention, the method comprises the step: Solving Equation 1 by using an iterative algorithm based on differentiable Monte-Carlo simulation of photons.

In at least one iteration or in each iteration of the iterative algorithm, a number of $n$ pixels can be randomly selected across all projections of a number of projections present in the image data.

Preferably, for each pixel, a number of $k$ energy samples are drawn from a current estimate of a source energy distribution. The source energy distribution preferably is the distribution of energy at an energy source of a CT device.

A method according to the present invention can further comprise the step: tracing at least one of the k energy samples through a volume using the inner integral of Equation 1 thereby obtaining a transmission probability of an energy level associated with the at least one energy sample.

Preferably, the step of tracing is performed for all $k$ energy samples and based on the result of the tracing an estimated intensity $\hat{I}(p)$ at a detector element, preferably of a CT device, is obtained.

A method according to the present invention can further comprise a step of comparing the estimated intensity $I^\wedge$ (p) with a measured intensity I (p) at the detector element, generating a gradient from the comparison and preferably backpropagating the gradient through the Monte-Carlo photon simulation.

A method according to the present invention can further comprise an optimization step comprising adapting at least one parameter, a subset of parameters or all parameters of Equation 1, preferably parameters $I_0(e)$ and / or $\mu(x, e)$.

Another aspect of the present invention pertains to a system configured to perform a method according to the present invention. The system can comprise or consist of a computer tomography device and / or a computer.

A further aspect of the invention pertains to a computer program product comprising machine executable instructions causing a system executing the instructions to perform a method according to the present invention.

Yet another aspect to the present invention pertains to a computer-readable medium comprising a computer program product according to the present invention.

A further aspect of the present invention pertains to a use of a method and / or a system and / or a computer program product and / or a computer-readable medium according to the present invention for imaging of an object, for quality control in manufacture, in particular industrial manufacture of goods, and / or in the medical field, in particular for medical imaging and / or diagnosis.

Preferably, the use is applied to an object comprising at least two different materials, preferably selected from the following group: metal, polymer, glass, tissue, bone. In other words, the method and / or a system and / or a computer program product and / or a computer-readable medium according to the present invention is preferably used for imaging of an object, comprising at least two different materials, preferably selected from the following group: metal, polymer, glass, tissue, bone.

Such an object can be e.g. a camera lens comprising, metal, polymer and glass or a patient comprising soft tissue, bone and e.g. a metal implant.

It is to be noted that the present disclosure is not limited to the feature combinations explicitly recited herein, but that all features disclosed may also be claimed in isolation or in any desirable combination.

Furthermore, it is to be understood that the articles in singular "a" or "an" are not to be construed as "only one" but are to be understood as "at least one". Thus, elements disclosed with an article in singular may also be present in plural and vice versa.

Further features and effects are disclosed in the following description of the figures. In the figures,

Fig 1a) shows a CT-image of a circuit board using conventional image reconstruction.

Fig. 1b) shows a CT-image of the same circuit board as in Fig. 1a) using image reconstruction according to the present invention.

Fig. 2a) shows a CT-image of a camera lens using conventional image reconstruction.

Fig. 2b) shows a CT-image of the same camera lens as in Fig. 12a) using image reconstruction according to the present invention.

Fig. 3 shows a flow chart of a method according to an embodiment of the in-venttion.

As can be clearly seen from the figures, the present invention achieves much clearer images with much less distortion due to beam hardening effects. The present invention demonstrates a significant reduction in beam hardening artifacts, addressing a long-standing challenge in computed tomography.

In Figure 1, a comparison is presented between image reconstruction results of a method according to the present invention and image reconstruction results obtained using a state-of-the-art iterative reconstruction provided by the Astra Toolbox, where the latter fails to accurately reconstruct the multi-material circuit board.

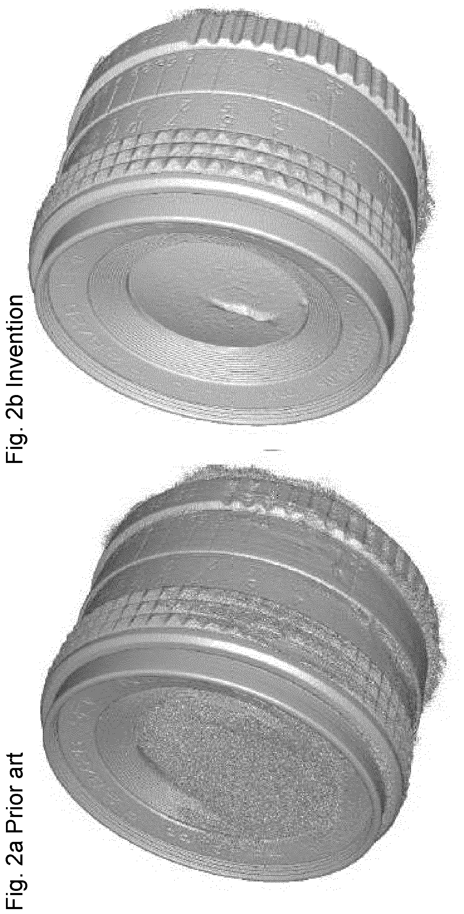

Furthermore, Fig. 2 illustrates the superior image reconstruction achievable with the present invention. The lens features materials of different densities, from the rubber grip band to various metal components and the glass lenses.

With the present invention, the boundaries between these components are much more pronounced and sharper.

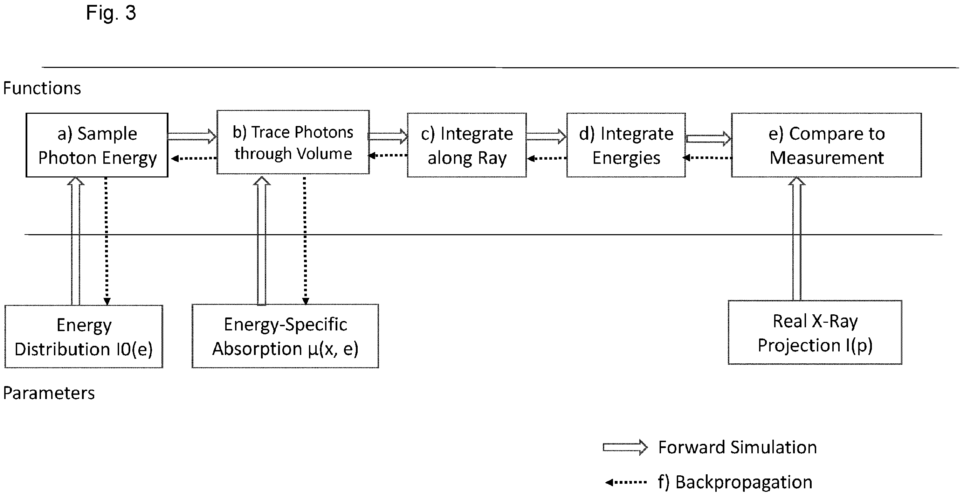

Further, the exemplary embodiment of the invention of Fig. 3 is described: In order to solve Equation (1), a novel iterative algorithm (as illustrated in Fig. 3) based on differentiable Monte-Carlo simulation of photons is used. This algorithm is outlined in Fig. 3 and described in the following. In the embodiment of Fig. 3, the algorithm comprises steps a) to f), but not all of these steps have to be present. The steps are explained below.

Step a) In each iteration, a number of n pixels are randomly selected across all projections. For each pixel, k energy samples are drawn from the current estimate of the source's energy distribution I0(e).

Step b) The corresponding photons are traced along rays through the volume and the absorption $\mu(x, e)$ is evaluated at each spatial location x using the photon's energy e.

Step c) The absorption values are integrated using the inner integral of Eq. (1). This results in the transmission probability of a photon with the energy e. For an efficient computation, the integral can be replaced by a finite sum of discretized volume samples during the reconstruction.

Step d) All photons that correspond to the same ray are integrated using the outer integral of Eq. (1) together with the energy distribution I0(e). The result is the estimated X-ray intensity at the detector pixel I^(p), which corresponds to the given ray. Similar to c), the integral is discretized to a finite sum over the k energy samples that have been drawn in a).

Step e) Finally, the estimated intensity I^(p) is compared to the measured intensity I(p) using the mean-square error (MSE) resulting in a gradient g for the pixel p.

Step f) The pixel gradient g is propagated back through the photon simulation as depicted by the dashed arrows in Fig. 3. Once the gradient reaches the parameters I0(e) and $\mu$(x, e), backpropagation is finished and the parameters are optimized using gradient decent.

During the reconstruction, the steps a) - f) are preferably repeated until convergence or a maximum number of iterations is reached. In the end, the volume $\mu$(x, e) is obtained, which can be used for analysis and diagnostic tasks.

A method according to the present inventions defined in claim 1 can comprise any one or more of steps a) to f) in any desirable combination.

The present invention offers a solution for eliminating beam hardening artifacts in multi-material objects, thus significantly improving image quality.

This advancement has wide-ranging applications, particularly in the fields of industrial quality assurance and measurements, where many objects consist of a combination of plastic and metal components. With reduced image artifacts, defects can now be detected more accurately, minimizing the occurrence of false positives.

Additionally, in the medical field, the present invention enables accurate diagnosis for patients with metal implants, overcoming the challenges posed by strong artifacts that previously hindered precise imaging and analysis.

**Claims**

1. Method for image reconstruction for computer tomography, in particular for reducing beam hardening effects, wherein image reconstruction is performed based on the generalized Lambert-Beer law for polychromatic sources

$$I(p) = \int_{e=0}^{\infty} \left( I_0(e) \exp \left( -\int_0^x -\log(\mu(r_p(t), e)) dt \right) \right) de$$

[Equation 1]

   where $I(p)$ is the intensity at pixel $p$, $I_0(e)$ is the energy distribution of the source, $r_p$ the ray associated with pixel $p$, and $\mu(x, e)$ the energy-dependent absorption coefficient of the volume at position $x$.

2. Method according to claim 1, comprising the step: Solving Equation 1 by using an iterative algorithm based on differentiable Monte-Carlo simulation of photons.

3. Method according to claim 2, wherein in each iteration of the iterative algorithm, a number of $n$ pixels is randomly selected across all projections of a number of projections.

4. Method according to claim 3, wherein for each pixel, a number of k energy samples are drawn from a current estimate of a source energy distribution.

5. Method according to claim 4, further comprising the step: tracing at least one of the k energy samples through a volume using the inner integral of Equation 1 thereby obtaining a transmission probability of an energy level associated with the at least one energy sample.

6. Method according to claim 5, wherein the step of tracing is performed for all $k$ energy samples and based on the result of the tracing an estimated intensity $I^(p)$ at a detector element is obtained.

7. Method according to claim 6, further comprising a step of comparing the estimated intensity $I^(p)$ with a measured intensity I (p) at the detector element, generating a gradient from the comparison and preferably backpropagating the gradient through the Monte-Carlo photon simulation.

**8.** Method according to claim 6, further comprising an optimization step comprising adapting at least one parameter, a subset of parameters or all parameters of Equation 1, preferably parameters $I_0(e)$ and / or $\mu(x, e)$.

**9.** System configured to perform a method according to one of claims 1 to 8.

**10.** System according to claim 9, wherein the system comprises or consists of a computer tomography device.

**11.** Computer program product comprising machine executable instructions causing a system executing the instructions to perform a method according to one of claims 1 to 8.

**12.** Computer-readable medium comprising a computer program product according to claim 11.

**13.** Use of a method according to one of claims 1 to 8, a system according to claim 9 or 10, a computer program product according to claim 11 and / or a computer-readable medium for quality control in manufacture, in particular industrial manufacture of goods, and / or in the medical field, in particular for medical imaging and / or diagnosis.

**14.** Use according to claim 13, wherein the use is applied to an object comprising at least two different materials, preferably of different densities and preferably selected from the following group: metal, polymer, glass, tissue, bone.

Fig. 1b Invention

Fig. 1a Prior art

Fig. 2b Invention

Fig. 2a Prior art

Fig. 3

Functions

a) Sample Photon Energy → b) Trace Photons through Volume → c) Integrate along Ray → d) Integrate Energies → e) Compare to Measurement

Real X-Ray Projection I(p)

Energy-Specific Absorption μ(x, e)

Energy Distribution I0(e)

Parameters

⟹ Forward Simulation

······▶ f) Backpropagation

Europäisches
Patentamt

European
Patent Office

Office européen
des brevets

# EUROPEAN SEARCH REPORT

**Application Number**

**EP 23 20 4306**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BISMARK RICHARD N K ET AL: "Reduction of beam hardening artifacts on real C-arm CT data using polychromatic statistical image reconstruction", ZEITSCHRIFT FUR MEDIZINISCHE PHYSIK, URBAN UND FISCHER, JENA, DE, vol. 30, no. 1, 9 December 2019 (2019-12-09), pages 40-50, XP086070983, ISSN: 0939-3889, DOI: 10.1016/J.ZEMEDI.2019.10.002 [retrieved on 2019-12-09] | 1,9-14 | INV. G06T11/00 |
| Y | * the whole document * | 2-8 | |
| Y | JOHAN NUYTS ET AL: "TopModelling the physics in the iterative reconstruction for transmission computed tomography", PHYSICS IN MEDICINE AND BIOLOGY, INSTITUTE OF PHYSICS PUBLISHING, BRISTOL GB, vol. 58, no. 12, 5 June 2013 (2013-06-05), pages R63-R96, XP020246384, ISSN: 0031-9155, DOI: 10.1088/0031-9155/58/12/R63 * the whole document * | 2-8 | |

**TECHNICAL FIELDS SEARCHED (IPC)**

G06T

The present search report has been drawn up for all claims

| Place of search | Date of completion of the search | Examiner |
|---|---|---|
| Munich | 9 April 2024 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)